# FASCICULE DE BREVET EUROPEEN

(11) **EP 1 520 499 B1**
(45) Date de publication et mention de la délivrance du brevet: **04.06.2008**
(21) Numéro de dépôt: 04356154.7
(22) Date de dépôt: 13.09.2004
(51) Int. Cl.: A47J 43/07

(54) **Appareil électroménager de préparation culinaire**
Elektrisches Haushaltsgerät zur Nahrungszubereitung
Electrical houshold appliance for cooking preparation

(30) Priorité: 03.10.2003 FR 0311607
(43) Date de publication de la demande: 06.04.2005
(73) Titulaire: SEB S.A., 69130 Ecully (FR)
(72) Inventeur: Martin, Philippe, 53940 Le Genest Saint Isle (FR); Radigue, Jean Jacques, 53100 Mayenne (FR)
(74) Mandataire: Kiehl, Hubert

(56) Documents cités:
- EP-A- 0 063 241
- WO-A-02/21986
- DE-A- 2 936 804

## Description

La présente invention concerne le domaine technique général des appareils électroménagers de préparation culinaire tels que notamment les robots ménager multifonctions ou encore les blenders. La présente invention est relative à un appareil comportant un socle sur lequel repose un récipient de travail amovible et se rapporte plus particulièrement aux moyens de retenue du récipient sur le socle.

On connaît, du document FR 2 276 800, un robot ménager dans lequel un bol amovible est posé sur un socle et est immobilisé sur ce dernier par un système de retenue à baïonnette. A cet effet, le bol comporte une embase constituée par une couronne s'insérant dans un logement du socle délimité par un épaulement, l'embase du socle étant munie de tenons s'engageant dans des échancrures de l'épaulement du socle.

Un tel dispositif de retenue présente cependant l'inconvénient de nécessiter une attention particulière de l'utilisateur lorsque ce dernier souhaite engager le bol sur le socle, l'utilisateur étant obligé de chercher du regard l'endroit où se trouvent les tenons pour les amener en face des échancrures de la couronne. Une telle opération est rendue compliquée par la petite taille des tenons qui les rend peu visibles et par la forme arrondie du bol qui contribue à masquer les tenons.

L'invention qui suit vise à pallier à ces inconvénients.

Le but de l'invention est atteint par un appareil électroménager de préparation culinaire comportant un boîtier comprenant un socle sur lequel repose un récipient de travail, le boîtier logeant un moteur entraînant un outil rotatif monté dans le fond du récipient de travail, le récipient de travail étant amovible sur le socle et comportant une poignée de préhension, caractérisé en ce que ledit socle comporte des moyens de retenue qui coopèrent avec la poignée du récipient pour immobiliser le récipient de travail sur le socle suivant au moins un axe de rotation ou de translation.

Une telle caractéristique présente l'avantage d'offrir des moyens de retenue du récipient sur le socle qui sont d'une grande visibilité, améliorant ainsi notablement l'ergonomie d'utilisation de l'appareil.

Selon une autre caractéristique de l'invention, le socle comporte un logement de réception du récipient qui est délimité par un épaulement périphérique, ce dernier comportant une échancrure ouverte sur le bord supérieur de l'épaulement dans laquelle vient se loger une partie de la poignée.

Cette caractéristique permet de garantir une mise en place aisée du récipient sur le socle.

Selon une autre caractéristique de l'invention, la poignée du récipient comporte un bras de liaison inférieur qui vient s'engager dans l'échancrure lorsque le récipient est placé dans son logement.

Une telle caractéristique permet d'avoir un bras de liaison qui assure à la fois une grande rigidité à la poignée et participe à l'immobilisation du récipient.

Selon une autre caractéristique de l'invention, l'échancrure présente, au niveau du bord supérieur de l'épaulement, une ouverture s'étendant latéralement sur une largeur légèrement supérieure à la largeur du bras de liaison de la poignée et l'échancrure s'étend, au coeur de l'épaulement, sur une largeur plus importante de sorte qu'il résulte au moins un ergot de blocage sur l'un des bords de l'ouverture sous lequel le bras de liaison de la poignée peut au moins partiellement s'engager.

Une telle caractéristique permet d'obtenir un système de retenue de type baïonnette assurant le maintien vertical du récipient sur son socle qui présente l'avantage d'être très visible, ce qui permet une manipulation intuitive de l'utilisateur.

Selon encore une autre caractéristique de l'invention, le logement du socle comporte un fond en forme de dôme muni en son centre d'une bague de centrage, au travers de laquelle passe un arbre d'entraînement de l'outil de travail, et le récipient présente un fond muni en son centre d'un manchon de guidage s'engageant autour de la bague de centrage.

Une telle caractéristique permet d'assurer le centrage du récipient sur son socle et l'immobilisation en translation du récipient dans le plan du socle.

Selon encore une autre caractéristique de l'invention, le bras de liaison de la poignée vient s'engager par rotation sous l'ergot de blocage, en venant au contact avec ce dernier, de sorte qu'il résulte des efforts de frottement entre l'ergot et le bras de liaison.

Une telle caractéristique permet d'obtenir une liaison socle/récipient assurant à la fois l'immobilisation verticale et en rotation du récipient sur son socle, l'immobilisation en rotation étant obtenue par les efforts de frottement entre l'ergot et le bras de liaison.

Selon une autre caractéristique de l'invention, le bras de liaison de la poignée présente un bord arrondi favorisant l'engagement du bras de liaison sous l'ergot de blocage.

Selon encore une autre caractéristique de l'invention, la poignée s'étend verticalement depuis le bord supérieur du récipient jusqu'à proximité du bord inférieur du récipient.

Une telle caractéristique permet d'avoir un récipient avec une poignée de grande dimension facilitant sa préhension.

Selon encore une autre caractéristique de l'invention, l'échancrure s'étend jusqu'au fond du logement de réception.

Une telle caractéristique permet d'évacuer automatiquement tout liquide versé dans le socle.

Selon encore une autre caractéristique de l'invention, le récipient comporte un couvercle qui est verrouillé d'une part sur la poignée du récipient et d'autre part sur le boîtier de l'appareil.

Une telle caractéristique permet de renforcer l'immobilisation du récipient sur son socle par l'intermédiaire du couvercle.

Selon une autre caractéristique de l'invention, le couvercle comporte une patte de verrouillage qui vient s'insérer, par rotation du couvercle, dans une fente du boîtier.

Une telle caractéristique permet, par une manipulation aisée du couvercle, de verrouiller le couvercle en rotation sur le récipient tout en assurant un point d'accrochage vertical.

Selon une autre caractéristique de l'invention, le couvercle comporte une cavité dans laquelle vient s'insérer, par rotation du couvercle, un tenon porté latéralement par la poignée du récipient.

Une telle caractéristique permet de renforcer le verrouillage vertical du couvercle sur le récipient.

Selon une autre caractéristique de l'invention, la cavité est portée par un élément d'accrochage qui sert de butée s'opposant à la rotation du récipient dans le sens permettant le désengagement de la poignée de l'ergot de blocage.

Une telle caractéristique permet de renforcer le maintien du récipient sur son socle en empêchant la rotation du récipient et donc le déblocage de la poignée lorsque le couvercle est en position.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective représentant un robot selon un mode de réalisation particulier de l'invention dans laquelle le boîtier, le récipient et son couvercle sont représentés désassemblés ;
- la figure 2 est une vue en perspective selon un autre angle de vue du boîtier du robot de la figure 1 ;
- la figure 3 est une vue similaire à la figure 1 représentant le récipient et son couvercle assemblés sur le boîtier du robot, le robot étant muni de son outil de travail.

Seuls les éléments nécessaires à la compréhension de l'invention ont été représentés. Pour faciliter la lecture des dessins les mêmes éléments portent les mêmes références d'une figure à l'autre.

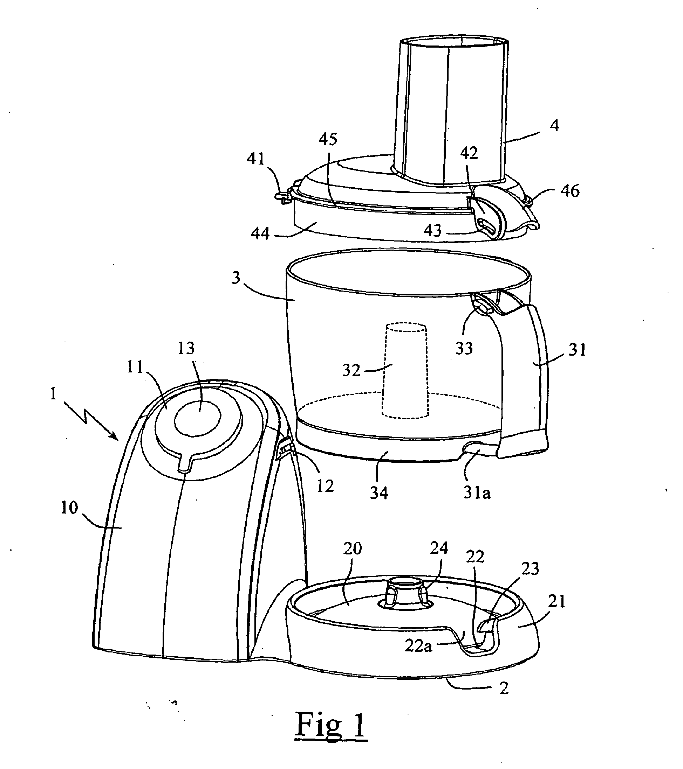

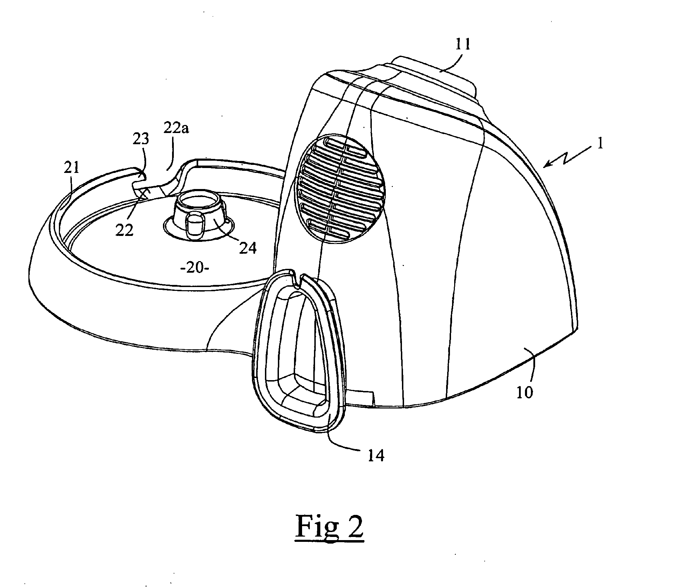

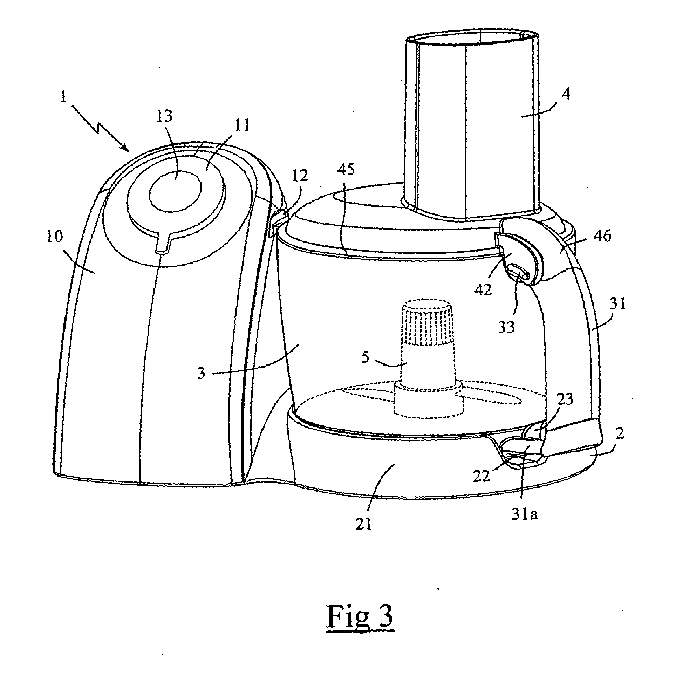

Le robot ménager ou appareil électroménager de préparation culinaire illustré aux figures 1 à 3 comprend un boîtier 1 muni d'un socle 2 destiné à recevoir un récipient 3 en forme de bol. Le socle 2 est adjacent à un caisson 10 dans lequel est disposé un moteur entraînant, par l'intermédiaire d'une transmission, un outil rotatif 5 (figure 3) au travers du fond du récipient 3.

Le caisson 10 est muni dans sa partie supérieure d'un bouton rotatif 11 annulaire permettant de commander la mise en marche du moteur et comporte dans sa partie arrière un support de câble 14 autour duquel le câble d'alimentation électrique du moteur peut être enroulé lors de son rangement.

Le socle 2 présente une empreinte servant de logement de réception 20 au récipient 3, cette empreinte étant délimitée par un épaulement périphérique 21 assurant le guidage de la partie inférieure du récipient 3 lors de sa mise en place sur le socle 2. Le fond du socle 2 possède la forme d'un dôme et comprend en son centre une bague de centrage 24, muni de trois bossages périphériques, au travers de laquelle passe un arbre d'entraînement de l'outil rotatif 5.

Le récipient 3 présente une ouverture supérieure qui peut être fermée par un couvercle 4 et est muni d'une couronne 34 dans sa partie inférieure servant de base au récipient 3. Le récipient 3 possède un fond plat légèrement surélevé par rapport au plan inférieur de la couronne 34 et comprend en son centre un manchon de guidage 32 venant se positionner autour de la bague de centrage 24, l'outil rotatif 5 étant rapporté autour du manchon de guidage 32.

Pour faciliter sa préhension, le récipient 3 comporte une poignée 31 s'étendant verticalement depuis le bord supérieur du récipient 3 jusqu'à proximité du bord inférieur de la couronne 34, la partie inférieure de la poignée 31 étant reliée à la couronne 34 par un bras de liaison 31 a aux bords arrondis.

Plus particulièrement selon l'invention, l'épaulement périphérique 21 du socle 2 comporte une échancrure latérale 22 dans laquelle vient se loger le bras de liaison inférieur 31 a de la poignée, cette échancrure 22 étant préférentiellement réalisée dans le quartier du socle qui est orienté vers l'avant du robot et à l'opposé du caisson 10.

L'échancrure 22 comporte une ouverture 22a au niveau du bord supérieur de l'épaulement 21 qui s'étend latéralement sur une largeur légèrement supérieure à la largeur du bras de liaison 31 a, les bords de l'ouverture 22a présentant des surfaces convergentes dans le sens d'introduction du bras de liaison 31 a dans l'échancrure. L'échancrure 22, qui présente une forme en L, s'étend latéralement au coeur de l'épaulement 21 sur une largeur plus importante que celle de l'ouverture 22a de sorte qu'il résulte un ergot de blocage 23, en bordure de l'ouverture 22a, sous lequel le bras de liaison 31 a peut être partiellement introduit, l'échancrure 22 et l'ergot de blocage 23 constituant des moyens de retenue du récipient 3 sur le socle 2.

La forme de l'ergot de blocage 23 peut être telle qu'il résulte un léger frottement entre le bord supérieur du bras de liaison 31 a et l'ergot de blocage 23, le récipient étant par ailleurs maintenu sensiblement parallèlement au socle 2 par l'emmanchement de la bague de centrage 24 du socle au travers du manchon de guidage 32.

De manière préférentielle, l'échancrure 22 réalisée dans l'épaulement périphérique 21 s'étend jusqu'au fond du logement de réception 20 de manière à permettre l'évacuation de tout liquide tombé dans le socle 2.

Le couvercle 4 qui est rapporté sur le récipient 3 présente une jupe inférieure 44 s'insérant dans le récipient pour assurer le centrage du couvercle 4 sur le récipient 3 et est bordé d'une nervure 45 venant reposer sur le bord supérieur du récipient 3. Le couvercle 4 possède sur sa périphérie une partie formant une portion de poignée 46 venant compléter la forme supérieure de la poignée 31 du récipient, cette dernière comportant une forme échancrée à cet endroit.

Le couvercle 4 comporte, en regard du caisson 10, une patte de verrouillage 41 qui vient s'insérer, par rotation du couvercle 4, dans une fente 12 du caisson 10 lorsque la portion de poignée 46 du couvercle est amenée dans l'alignement de la poignée 31 du récipient. Cette patte de verrouillage 41 immobilise le couvercle à la fois verticalement et en rotation et peut avantageusement être utilisée pour actionner un contacteur autorisant la mise en route du moteur seulement lorsque le couvercle 4 est en place. Le déverrouillage de la patte 41 s'effectue en appuyant sur un bouton poussoir 13 disposé au centre du bouton rotatif 11 du caisson 10.

La portion de poignée 46 appartenant au couvercle 4 comporte, sur l'un de ses côtés, une plaque d'accrochage 42 venant se placer de manière adjacente à la poignée 31 du récipient lors de la rotation du couvercle 4. Cette plaque d'accrochage 42 comporte une ouverture 43 formant une mortaise dans laquelle vient s'insérer un tenon 33 porté par le bord latéral de la poignée 31 du récipient, la pénétration du tenon 33 dans l'ouverture 43 participant à la retenue verticale du couvercle 4 sur le récipient 3. La plaque d'accrochage 42 sert également de butée latérale empêchant la rotation du récipient 3 dans le sens du désengagement du bras de liaison 31 a de l'ergot de blocage 23.

Un tel système de retenue du récipient sur son socle présente l'avantage de procurer une grande ergonomie d'utilisation, l'utilisateur ayant une très bonne vision des différents organes de retenue. En particulier, l'utilisateur n'a qu'à placer la poignée 31 dans l'axe de l'ouverture 22a de l'échancrure 22 puis à tourner la poignée de quelques degrés pour immobiliser le récipient 3 sur le socle 2. Une telle opération peut être faite de manière instinctive, sans chercher du regard les différents organes de retenue.

En fonction de l'outil de travail utilisé, le couvercle 4 peut ensuite être placé, puis verrouillé sur le récipient 3 et le caisson 10 par simple rotation du couvercle 4 amenant la patte de verrouillage 41 dans la fente 12, ce qui renforce alors l'immobilisation du récipient 3.

Lorsque l'utilisateur souhaite déverrouiller le couvercle 4, il appuie sur le bouton poussoir 13, ce qui provoque la libération de la patte de verrouillage 41 accompagnée d'une légère rotation du couvercle.

Bien entendu, l'invention est nullement limitée au mode de réalisation décrit et illustré qui n'a été donné qu'à titre d'exemple. Des modifications restent possibles, notamment du point de vue de la constitution des divers éléments ou par substitution d'équivatents techniques, sans sortir pour autant du domaine de protection de l'invention.

## Revendications

1. Appareil électroménager de préparation culinaire comportant un boîtier (1) comprenant un socle (2) sur lequel repose un récipient de travail (3), ledit boîtier (1) logeant un moteur entraînant un outil rotatif monté dans le fond dudit récipient de travail (3), ledit récipient de travail étant amovible sur le socle (2) et comportant une poignée de préhension (31), **caractérisé en ce que** ledit socle (2) comporte des moyens de retenue qui coopèrent avec la poignée (31) du récipient (3) pour immobiliser le récipient de travail (3) sur le socle (2) suivant au moins un axe de rotation ou de translation.

2. Appareil électroménager selon la revendication 1, **caractérisé en ce que** le socle (2) comporte un logement de réception (20) du récipient (3) qui est délimité par un épaulement périphérique (21) et **en ce que** ledit épaulement périphérique (21) comporte une échancrure (22) ouverte sur le bord supérieur de l'épaulement (21) dans laquelle vient se loger une partie de la poignée (31).

3. Appareil électroménager selon la revendication 2, **caractérisé en ce que** la poignée (31) du récipient comporte un bras de liaison (31 a) inférieur qui vient s'engager dans ladite échancrure (22) lorsque le récipient (3) est placé dans son logement (20).

4. Appareil électroménager selon la revendication 3, **caractérisé en ce que** ladite échancrure (22) présente, au niveau du bord supérieur de l'épaulement (21), une ouverture (22a) s'étendant latéralement sur une largeur légèrement supérieure à la largeur du bras de liaison (31a) et **en ce que** ladite échancrure (22) s'étend, au coeur de l'épaulement (21), sur une largeur plus importante de sorte qu'il résulte au moins un ergot de blocage (23) sur l'un des bords de l'ouverture (22a) sous lequel le bras de liaison (31 a) de la poignée peut au moins partiellement s'engager.

5. Appareil électroménager selon l'une quelconque des revendications 2 à 4, **caractérisé en ce que** le logement (20) du socle (2) comporte un fond en forme de dôme muni en son centre d'une bague de centrage (24), au travers de laquelle passe un arbre d'entraînement de l'outil de travail, et **en ce que** le récipient (3) présente un fond muni en son centre d'un manchon de guidage (32) s'engageant autour de ladite bague de centrage (24).

6. Appareil électroménager selon les revendications 4 et 5, **caractérisé en ce que** le bras de liaison (31 a) de la poignée (31) vient s'engager par rotation sous l'ergot de blocage (23) en venant au contact avec ce dernier de sorte qu'il résulte des efforts de frottement entre l'ergot (23) et le bras de liaison (31 a).

7. Appareil électroménager selon l'une quelconque des revendications 4 à 6, **caractérisé en ce que** le bras de liaison (31 a) de la poignée (31) présente un bord arrondi favorisant l'engagement du bras de liaison (31 a) sous l'ergot de blocage (23).

8. Appareil électroménager selon l'une quelconque des revendications 2 à 7, **caractérisé en ce que** la poignée (31) s'étend verticalement depuis le bord supérieur du récipient (3) jusqu'à proximité du bord inférieur du récipient (3).

9. Appareil électroménager selon l'une quelconque des revendications 2 à 8, **caractérisé en ce que** ladite échancrure (22) s'étend jusqu'au fond du logement de réception (20).

10. Appareil électroménager selon l'une quelconque des revendications 2 à 9, **caractérisé en ce que** le récipient (3) comporte un couvercle (4) qui est verrouillé d'une part sur la poignée (31) du récipient et d'autre part sur le boîtier (1) de l'appareil.

11. Appareil électroménager selon la revendication 9, **caractérisé en ce que** le couvercle (4) comporte une patte de verrouillage (41) qui vient s'insérer, par rotation du couvercle, dans une fente (12) du boîtier.

12. Appareil électroménager selon l'une quelconque des revendications 10 et 11, **caractérisé en ce que** le couvercle (4) comporte une cavité (43) dans laquelle vient s'insérer, par rotation du couvercle, un tenon (33) porté latéralement par la poignée (31) du récipient.

13. Appareil électroménager selon les revendications 4 et 12, **caractérisé en ce que** ladite cavité (43) est portée par un élément d'accrochage (42) qui sert de butée s'opposant à la rotation du récipient (3) dans le sens permettant le désengagement de la poignée (31) de l'ergot de blocage (23).

## Claims

1. A household electrical appliance for preparing food, which appliance comprises a housing (1) having a stand (2) on which a work receptacle (3) stands, said housing (1) receiving a motor that drives a rotary tool mounted in the bottom of said work receptacle (3), said work receptacle being removably mounted on the stand (2) and having a pick-up handle (31), said household electrical appliance being **characterized in that** said stand (2) is provided with retaining means that co-operate with the handle (31) on the receptacle (3) for holding the work receptacle stationary (3) on the stand (2) relative to at least one axis, which at least one axis is an axis of movement in rotation or an axis of movement in translation.

2. A household electrical appliance according to claim 1, **characterized in that** the stand (2) is provided with a recess (20) for receiving the receptacle (3), which recess is defined by a peripheral shoulder (21), and **in that** said peripheral shoulder (21) is provided with a notch (22) that is open onto the top edge of the shoulder (21) and in which a portion of the handle (31) comes to be received.

3. A household electrical appliance according to claim 2, **characterized in that** the handle (31) of the receptacle has a bottom link arm (31 a) that comes to be engaged in said notch (22) when the receptacle (3) is placed in its recess (20).

4. A household electrical appliance according to claim 3, **characterized in that**, at the top edge of the shoulder (21), said notch (22) has an opening (22a) extending laterally over a width that is slightly larger than the width of the link arm (31 a), and **in that**, at the core of the shoulder (21), said notch (22) extends over a larger width, this resulting in at least one blocking lug (23) being formed on one of the edges of the opening (22a), under which blocking lug the link arm (31 a) of the handle can be engaged, at least in part.

5. A household electrical appliance according to any one of claims 2 to 4, **characterized in that** the recess (20) in the stand (2) has a dome-shaped bottom that is provided at its center with a centering ring (24), through which ring a drive shaft passes for driving the work tool, and **in that** the receptacle (3) has a bottom provided at its center with a guide sleeve (32) that engages around said centering ring (24).

6. A household electrical appliance according to claims 4 and 5, **characterized in that** the link arm (31 a) of the handle (31) comes to be engaged by moving in rotation under the blocking lug (23) while coming into contact therewith so that friction forces result between the lug (23) and the link arm (31a).

7. A household electrical appliance according to any one of claims 4 to 6, **characterized in that** the link arm (31 a) of the handle (31) has a rounded edge that makes it easier for the link arm (31 a) to engage under the blocking lug (23).

8. A household electrical appliance according to any one of claims 2 to 7, **characterized in that** the handle (31) extends vertically from the top edge of the receptacle (3) to the vicinity of the bottom edge of the receptacle (3).

9. A household electrical appliance according to any one of claims 2 to 8, **characterized in that** said notch (22) extends to the bottom of the recess (20).

10. A household electrical appliance according to any one of claims 2 to 9, **characterized in that** the receptacle (3) has a lid (4) that is locked firstly onto the handle (31) of the receptacle and secondly onto the housing (1) of the appliance.

11. A household electrical appliance according to claim 9, **characterized in that** the lid (4) is provided with a locking catch (41) that comes, by means of the lid moving in rotation, to be inserted into a slot (12) in the housing.

12. A household electrical appliance according to claims 10 and 11, **characterized in that** the lid (4) is provided with a cavity (43) in which a tab (33) carried by one side of the handle (31) of the receptacle comes to be inserted.

13. A household electrical appliance according to claims 4 and 12, **characterized in that** said cavity (43) is carried by a latch element (42) that serves as an abutment opposing movement of the receptacle (3) in rotation in the direction enabling the handle (31) to be disengaged from the blocking lug (23).

## Patentansprüche

1. Elektrohaushaltsgerät zur Nahrungszubereitung, mit einem Gehäuse (1), das einen Sockel (2) aufweist, auf welchem ein Arbeitsbehälter (3) aufliegt, wobei das Gehäuse (1) einen Motor aufnimmt, das ein Drehwerkzeug antreibt, das im Boden des Arbeitsbehälters (3) angebracht ist, wobei der Arbeitsbehälter auf dem Sockel (2) abnehmbar ist und einen Griff (31) aufweist, **dadurch gekennzeichnet, dass** der Sockel (2) Haltemittel aufweist, die mit dem Griff (31) des Behälters (3) zusammenwirken, um den Arbeitsbehälter (3) auf dem Sockel (2) entlang mindestens einer Rotations- oder einer Verschiebeachse festzulegen.

2. Elektrohaushaltsgerät nach Anspruch 1, **dadurch gekennzeichnet, dass** der Sockel (2) eine Aufnahme (20) für den Behälter (3) aufweist, die durch eine umlaufende Schulter (21) begrenzt ist, und dass die umlaufende Schulter (21) einen Ausschnitt (22) aufweist, der am oberen Rand der Schulter (21) offen ist und in welchem ein Teil des Griffs (31) aufgenommen wird.

3. Elektrohaushaltsgerät nach Anspruch 2, **dadurch gekennzeichnet, dass** der Griff (31) des Behälters einen unteren Verbindungsarm (31 a) aufweist, der in den Ausschnitt (22) eingreift, wenn der Behälter (3) in seiner Aufnahme (20) angeordnet ist.

4. Elektrohaushaltsgerät nach Anspruch 3, **dadurch gekennzeichnet, dass** der Ausschnitt (22) auf der Höhe des oberen Rands der Schulter (21) eine Öffnung (22a) aufweist, die sich seitlich auf einer Breite erstreckt, die geringfügig größer als die Breite des Verbindungsarms (31a) ist, und dass der Ausschnitt (22) sich in der Mitte der Schulter (21) auf einer größeren Breite erstreckt, so dass auf dem einen Rand der Öffnung (22a) mindestens eine Arretierungsnase (23) entsteht, unterhalb welcher der Verbindungsarm (31 a) des Griffs mindestens teilweise eingreifen kann.

5. Elektrohaushaltsgerät nach einem der Ansprüche 2 bis 4, **dadurch gekennzeichnet, dass** die Aufnahme (20) des Sockels (2) einen kuppelförmigen Boden aufweist, der in seinem Zentrum mit einem Zentrierring (24) versehen ist, durch welchen eine Antriebswelle des Arbeitswerkzeugs hindurchgeht, und dass der Behälter (3) einen Boden aufweist, der in seinem Zentrum mit einer Führungshülse (32) versehen ist, die den Zentrierring (24) umgreift.

6. Elektrohaushaltsgerät nach den Ansprüche 4 und 5, **dadurch gekennzeichnet, dass** der Verbindungsarm (31 a) des Griffs (31) durch Drehung unter die Arretierungsnase (23) eingreift, indem er mit letzterer in Berührung kommt, so dass sich Reibungskräfte zwischen der Nase (23) und dem Verbindungsarm (31 a) ergeben.

7. Elektrohaushaltsgerät nach einem der Ansprüche 4 bis 6, **dadurch gekennzeichnet, dass** der Verbindungsarm (31 a) des Griffs (31) einen abgerundeten Rand aufweist, der das Eingreifen des Verbindungsarms (31 a) unter die Arretierungsnase (23) unterstützt.

8. Elektrohaushaltsgerät nach einem der Ansprüche 2 bis 7, **dadurch gekennzeichnet, dass** der Griff (31) sich senkrecht vom oberen Rand des Behälters (3) bis in die Nähe des unteren Rands des Behälters (3) erstreckt.

9. Elektrohaushaltsgerät nach einem der Ansprüche 2 bis 8, **dadurch gekennzeichnet, dass** der Ausschnitt (22) sich bis zum Boden der Aufnahme (20) erstreckt.

10. Elektrohaushaltsgerät nach einem der Ansprüche 2 bis 9, **dadurch gekennzeichnet, dass** der Behälter (3) einen Deckel (4) aufweist, der einerseits am Griff (31) des Behälters und andererseits am Gehäuse (1) des Geräts verriegelt ist.

11. Elektrohaushaltsgerät nach Anspruch 9, **dadurch gekennzeichnet, dass** der Deckel (4) eine Verriegelungslasche (41) aufweist, die sich durch Drehung des Deckels in einen Spalt (12) des Gehäuses einsteckt.

12. Elektrohaushaltsgerät nach einem der Ansprüche 10 und 11, **dadurch gekennzeichnet, dass** der Deckel (4) einen Hohlraum (43) aufweist, in welchen durch Drehung des Deckels ein seitlich vom Griff (31) des Behälters getragener Zapfen (33) sich einsteckt.

13. Elektrohaushaltsgerät nach den Ansprüche 4 und 12, **dadurch gekennzeichnet, dass** der Hohlraum (43) durch ein Einhängeelement (42) getragen ist, der als Anschlag dient, der sich der Drehung des Behälters (3) in der Richtung, in welcher der Griff (31) aus der Arretierungsnase (23) außer Eingriff gebracht werden kann, entgegensetzt.
